(19) Europäisches Patentamt
European Patent Office
Office européen des brevets

(11) Veröffentlichungsnummer: **0 114 636**
**A2**

(12) # EUROPÄISCHE PATENTANMELDUNG

(21) Anmeldenummer: 84100413.8

(22) Anmeldetag: 17.01.84

(51) Int. Cl.³: C 07 F 7/18

(30) Priorität: 20.01.83 DE 3301807

(43) Veröffentlichungstag der Anmeldung: 01.08.84 Patentblatt 84/31

(84) Benannte Vertragsstaaten: AT BE DE FR GB IT

(71) Anmelder: WACKER-CHEMIE GMBH
Prinzregentenstrasse 22
D-8000 München 22(DE)

(72) Erfinder: Lindner, Tassilo, Dr. Dipl.-Chem.
Neuhauserstrasse 10
D-8261 Mehring-Oed(DE)

(72) Erfinder: John, Peter, Dr. Dipl.-Chem.
Marienberger Strasse 80
D-8263 Burghausen(DE)

(72) Erfinder: Zeller, Norbert, Dr. Dipl.-Chem.
Schweitzer Strasse 5
D-8263 Burghausen(DE)

(72) Erfinder: Riedle, Rudolf, Dr. Dipl.-Chem.
Lindenweg 29
D-8263 Burghausen(DE)

(54) **Verfahren zur Herstellung von Silanen mit SiC-gebundener Bernsteinsäureanhydridgruppe und Silane mit derartiger Gruppe.**

(57) Silane mit SiC-gebundener Bernsteinsäureanhydridgruppe werden durch Umsetzung eines Bernsteinsäureanhydrid-Derivats der allgemeinen Formel

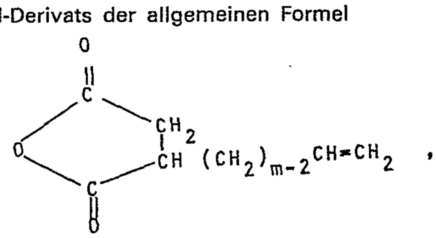

wobei m 2 oder 3 ist, mit einem Silan der allgemeinen Formel

$HSiR_nX_{3-n}$ ,

wobei R gleiche oder verschiedene, einwertige, SiC-gebundene organische Reste, X gleiche oder verschiedene Alkoxy- oder Alkoxyalkylenoxyreste bedeutet und n 0, 1 oder 2 ist, in Gegenwart von die Anlagerung von Si-gebundenem Wasserstoff an aliphatische Mehrfachbindung förderndem Katalysator hergestellt.

Silane der allgemeinen Formel

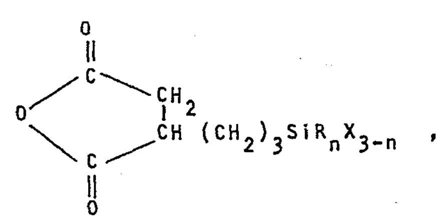

worin R, X und n die oben dafür angegebene Bedeutung haben, sind neu.

EP 0 114 636 A2

W A C K E R - C H E M I E
G M B H

München, den 28.12.1982
Dr.Ru/rei

Wa 8250-S

# Verfahren zur Herstellung von Silanen mit SiC-gebundener Bernsteinsäureanhydridgruppe und Silane mit derartiger Gruppe

Aus US 3 403 169 (ausgegeben 24. September 1968, B. Rudner et al., Koppers Company, Inc.), Beispiel V, ist es bekannt, daß 2-Triethoxysilylethyl-bernsteinsäureanhydrid durch Umsetzung von Ethyltriethoxysilan mit Maleinsäureanhydrid mit Di-tert.-butylperoxyd als Katalysator erhältlich ist. Die bei diesem bekannten Verfahren erzielte Ausbeute ist jedoch gering.

Aufgabe der Erfindung ist es, Silane mit SiC-gebundener Bernsteinsäureanhydridgruppe, wobei sich zwischen dem Si-Atom und der Bernsteinsäureanhydridgruppe 2 oder 3 Methylengruppen befinden, in befriedigender Ausbeute herzustellen. Weiterhin ist Aufgabe der Erfindung, neue Silane mit SiC-gebundener Bernsteinsäureanhydridgruppe zu finden. Diese Aufgaben werden durch die Erfindung gelöst.

Gegenstand der Erfindung ist ein Verfahren zur Herstellung von Silanen mit SiC-gebundener Bernsteinsäureanhydridgruppe, dadurch gekennzeichnet, daß ein Bernsteinsäureanhydrid-Derivat der allgemeinen Formel

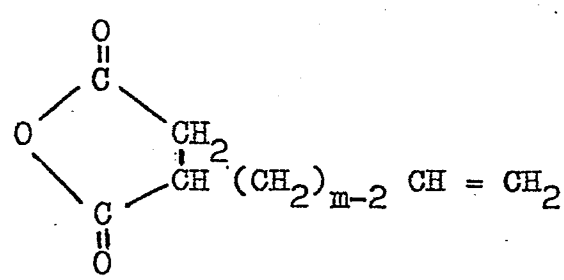
,

wobei m 2 oder 3 ist, mit einem Silan der allgemeinen Formel

$$HSiR_nX_{3-n} \quad ,$$

wobei R gleiche oder verschiedene, einwertige, SiC-gebundene organische Reste, X gleiche oder verschiedene Alkoxy- oder Alkoxyalkylenoxyreste bedeutet und n 0, 1 oder 2 ist, in Gegenwart von die Anlagerung von Si-gebundenem Wasserstoff an aliphatische Mehrfachbindung förderndem Katalysator umgesetzt wird.

Vorzugsweise hat m den Wert 3.
Vorzugsweise enthalten die Reste R 1 bis 4 Kohlenstoffatome je Rest. Weiterhin ist es bevorzugt, daß diese Reste R frei von aliphatischen Mehrfachbindungen sind.

Beispiele für bevorzugte Reste R sind Alkylreste, wie der Methyl-, Ethyl-, n-Propyl-, Isopropyl-, n-Butyl- und sec.-Butylrest. Die Alkylreste können durch gegenüber einer Anlagerung an Si-gebundenen Wasserstoff inerte Substituenten substituiert sein. Ein Beispiel für einen derartigen substituierten Alkylrest ist der 3,3,3-Trifluorpropylrest.

Besonders bevorzugt als Rest R ist der Methylrest.
Vorzugsweise enthalten die Reste X 1 bis 6 Kohlenstoffreste je Rest.

Bevorzugte Beispiele für Reste X sind der Methoxy-, Ethoxy-, Isopropoxy- und der Methoxyethylenoxyrest.

Einzelne Beispiele für Silane der allgemeinen Formel

$$HSiR_nX_{3-n}$$

sind
Trimethoxysilan, Methyldimethoxysilan, Dimethylmethoxysilan, Triethoxysilan, Methyldiethoxysilan, Dimethylethoxysilan, Tris-(methoxyethylenoxy)-silan, Methyl-bis-(methoxyethylenoxy)-silan und Dimethylmethoxyethylenoxysilan.

Als die Anlgerung von Si-gebundenem Wasserstoff an aliphatische Mehrfachbindung fördernde Katalysatoren können im Rahmen des erfindungsgemäßen Verfahrens beliebige die Anlagerung von Si-gebundenem Wasserstoff an aliphatische Mehrfachbindung fördernde Katalysatoren verwendet werden. Beispiele für solche Katalysatoren sind metallisches und feinverteiltes Platin, Ruthenium, Rhodium, Palladium und Iridium, wobei sich diese Metalle jeweils auf festen Trägern, wie Siliciumdioxyd, Aluminiumoxyd oder Aktivkohle befinden können, und Verbindungen bzw. Komplexe dieser Elemente, wie $PtCl_4$, $H_2PtCl_6 \cdot 6H_2O$, $NaPtCl_4 \cdot 4H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, insbesondere Platin-Divinyltetramethyldisiloxan-Komplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylen-platin(II)-dichlorid, Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, sowie Carbonyle des Eisens, Kobalts oder Nickels.

Vorzugsweise wird das erfindungsgemäße Verfahren in flüssiger und homogener Phase durchgeführt. Deshalb sind als die Anlagerung von Si-gebundenem Wasserstoff an aliphatische Mehrfachbindung fördernde Katalysatoren im Rahmen des erfindungsgemäßen Verfahrens solche bevorzugt, die das Arbeiten in flüssiger und homogener Phase ermöglichen.

Die Anlagerung von Si-gebundenem Wasserstoff an aliphatische Mehrfachbindung fördernder Katalysator wird vorzugsweise in Mengen von $10^{-7}$ bis $10^{-3}$ Grammatom Metall bzw. Metallanteil in den Katalysatorverbindungen bzw. -Komplexen je Grammatom der jeweils verwendeten Menge von Si-gebundenem Wasserstoff eingesetzt.

Vorzugsweise wird die erfindungsgemäße Umsetzung bei 70 bis 120°C durchgeführt. Die bei dem erfindungsgemäßen Verfahren anzuwendenden Drücke sind nicht entscheidend. Meist liegt der Druck der umgebenden Atmosphäre, also 1020 mbar (abs.) oder etwa 1020 mbar (abs.) vor. Falls erwünscht, können jedoch auch höhere oder niedrigere Drücke als der Druck der umgebenden Atmosphäre angewendet werden.

Die Mitverwendung von gegenüber Reaktionsteilnehmer und Katalysator inerten Lösungsmitteln als Reaktionsmedium ist nicht erforderlich, aber auch nicht ausgeschlossen.

Bei absatzweiser Durchführung des erfindungsgemäßen Verfahrens ist es bevorzugt, zunächst den Katalysator in das Reaktionsgefäß einzubringen und dann ein etwa äquimolares Gemisch aus dem Bernsteinsäureanhydridderivat der oben angegebenen Formel und dem Silan der oben angegebenen Formel tropfenweise zu dem Katalysator zu geben.

Das durch die erfindungsgemäße Umsetzung erhaltene Silan mit SiC-gebundener Bernsteinsäureanhydridgruppe kann durch Destillation leicht in reiner Form gewonnen werden.

Gegenstand der Erfindung sind weiterhin Silane der allgemeinen Formel

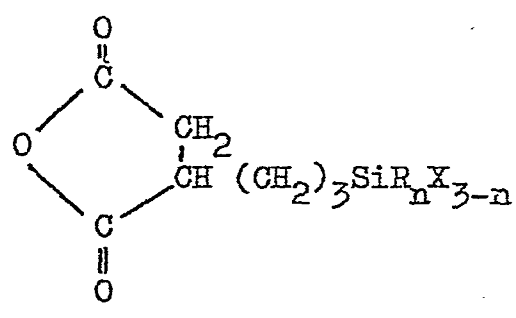

,

worin R, X und n jeweils die oben dafür angegebene Bedeutung haben.

Alle oben im Zusammenhang mit dem erfindungsgemäßen Verfahren gemachten Ausführungen über R, X und n gelten in vollem Umfang auch für R, X und n in den erfindungsgemäßen Silanen. Einzelne Beispiele für erfindungsgemäße Silane sind
3-Trimethoxysilylpropyl-bernsteinsäureanhydrid (X = Methoxy, n = 0)
3-Methyldimethoxysilylpropyl-bernsteinsäureanhydrid (R = Methyl, X = Methoxy, n = 1)
3-Dimethylmethoxysilylpropyl-bernsteinsäureanhydrid (R = Methyl, X = Methoxy, n = 2)
3-Triethoxysilylpropyl-bernsteinsäureanhydrid (X = Ethoxy, n = 0)
3-Methyldiethoxysilylpropyl-bernsteinsäureanhydrid (R = Methyl, X = Ethoxy, n = 1)
3-Dimethylethoxysilylpropyl-bernsteinsäureanhydrid (R = Methyl, X = Ethoxy, n = 2)
3-Tris-(methoxyethylenoxy)-silylpropyl-bernsteinsäureanhydrid (X = Methoxyethylenoxy, n = 0
3- Methylbis-(methoxyethylenoxy)-silylpropyl-bernsteinsäureanyhdrid (X = Methoxyethylenoxy, R = Methyl, n = 1)
3-Dimethylmethoxyethylenoxysilylpropyl-bernsteinsäureanhydrid (R = Methyl, X = Methoxyethylenoxy, n = 2).

Die erfindungsgemäß hergestellten Silane eignen sich ebenso wie die erfindungsgemäßen Silane beispielsweise auf Glasfasern oder als Zusätze zu den Harzen zur Verbesserung der Verbindung der Fasern mit z.B. Polyester-, Polyamid-, Polymethan- und Epoxydharzen, als Grundiermittel auf Glas und Aluminium zur Verbesserung der Haftung von Lacken, als Vernetzer oder Haftvermittler in Organopolysiloxanelastomeren, als Zusätze für Kühlflüssigkeiten zur Korrosionsverhinderung sowie als Stabilisatoren für Polymere, die gegenüber Aminen und anderen basischen Stoffen empfindlich sind.

Die in den folgenden Beispielen verwendete Katalysatorlösung wurde hergestellt wie folgt:
27,5 g Platintetrachlorid werden in 1,6 l 1-Okten 2 Stunden auf 100°C erwärmt. Dann wird 1 l der so erhaltenen Lösung im Gemisch mit 3,1 ml sec.-Butylamin eine Stunde auf 60°C erwärmt.

Beispiel 1

Zu 5 ml der Katalysatorlösung, deren Herstellung vorstehend beschrieben wurde, wird unter Rühren bei 90°C ein Gemisch aus 1,40 kg (10 Mol) Allylbernsteinsäureanhydrid und 1,64 kg (10 Mol) Triethoxysilan innerhalb von 2 Stunden tropfenweise gegeben. Nach 1 Stunde weiteren Rührens wird das 3-Triethoxysilylpropyl-bernsteinsäureanyhdrid bei 0,4 mbar (abs.) und 152°C abdestilliert. Es wird in einer Menge von 2,71 kg (89,1 Gewichtsprozent d. Th.) erhalten.
Brechungsindex $n_D^{25}$ = 1,4422
Dichte $D^{25}$ = 1,09 g/ml
Viskosität: 20 $mm^2 \cdot s^{-1}$ bei 25°C.

Beispiel 2

Die in Beispiel 1 beschriebene Arbeitsweise wird wiederholt mit der Abänderung, daß anstelle der 1,64 kg Triethoxysilan 1,04 kg (10 Mol) Dimethylethoxysilan eingesetzt werden.

Es werden 1,98 kg (81,1 Gewichtsprozent d.Th.) Dimethylethoxysilylpropyl-bernsteinsäureanhydrid vom Kp. 150°C bei 1 mbar (abs.) erhalten.
Brechungsindex $n_D^{25}$ = 1,4540
Dichte $D^{25}$ = 1,05 g/ml
Viskosität: 26 $mm^2 \cdot s^{-1}$ bei 25°C.

Beispiel 3

Die in Beispiel 1 beschriebene Arbeitsweise wird wiederholt mit der Abänderung, daß anstelle der 1,64 kg Triethoxysilan 1,34 (10 Mol) Dimethylmethoxyethylenoxysilan eingesetzt werden.

Es werden 1,92 kg (70,1 Gewichtsprozent d. Th.) 3-Dimethylmethoxyethylenoxysilylpropyl-bernsteinsäureanyhdrid vom Kp. 158°C bei 0,2 mbar (abs.) erhalten.

Brechungsindex $n_D^{25}$ = 1,4580

Dichte $D^{25}$ = 1,08 g/ml

Viskosität: 30 $mm^2 \cdot s^{-1}$ bei 25°C.

Patentansprüche:

1. Verfahren zur Herstellung von Silanen mit SiC-gebundener Bernsteinsäureanhydridgruppe, dadurch gekennzeichnet, daß ein Bernsteinsäureanhydrid-Derivat der allgemeinen Formel

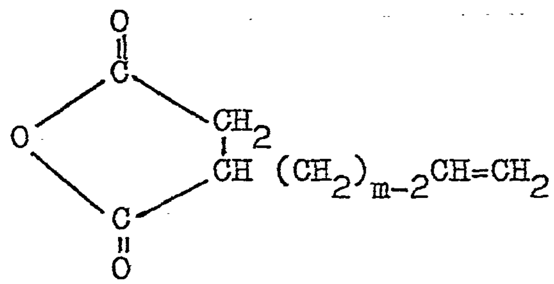

,

wobei m 2 oder 3 ist, mit einem Silan der allgemeinen Formel

$$HSiR_nX_{3-n}$$ ,

wobei R gleiche oder verschiedene, einwertige, SiC-gebundene organische Reste, X gleiche oder verschiedene Alkoxy- oder Alkoxyalkylenoxyreste bedeutet und n 0, 1 oder 2 ist, in Gegenwart von die Anlagerung von Si-gebundenem Wasserstoff an aliphatische Mehrfachbindung förderndem Katalysator umgesetzt wird.

2. Verfahren nach Anspruch 1, dadurch gekennzeichnet, daß m den Wert 3 hat.

3. Silane der allgemeinen Formel

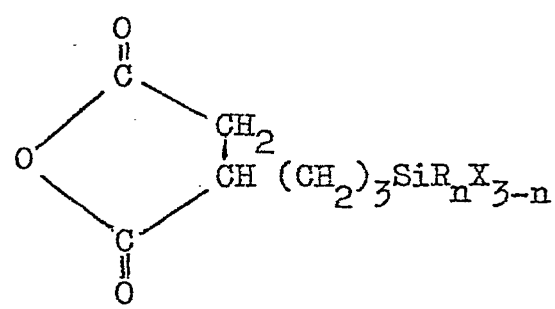

,

worin R, X und n jeweils die oben dafür angegebene Bedeutung haben.

4. 3-Triethoxysilylpropyl-bernsteinsäureanhydrid.

5. 3-Dimethylethoxysilylpropyl-bernsteinsäureanyhdrid.

6. 3-Dimethylmethoxyethylenoxysilylpropylbernsteinsäureanhydrid.